# EUROPÄISCHE PATENTSCHRIFT

(11) **EP 2 875 257 B1**
(45) Veröffentlichungstag und Bekanntmachung des Hinweises auf die Patenterteilung: **01.03.2017**
(21) Anmeldenummer: 13730221.2
(22) Anmeldetag: 18.06.2013
(51) Int. Cl.: F16D 3/66, F16F 15/134, F16F 15/14, F16F 15/131, F16F 15/12

(54) **DREHSCHWINGUNGSDÄMPFUNGSANORDNUNG FÜR DEN ANTRIEBSSTRANG EINES FAHRZEUGS**
ROTATIONAL VIBRATION DAMPING ARRANGEMENT FOR THE DRIVE TRAIN OF A VEHICLE
SYSTÈME D'AMORTISSEMENT DES VIBRATIONS DE TORSION DE LA CHAÎNE CINÉMATIQUE D'UN VÉHICULE

(30) Priorität: 18.07.2012 DE 102012212593
(43) Veröffentlichungstag der Anmeldung: 27.05.2015
(73) Patentinhaber: ZF Friedrichshafen AG, 88046 Friedrichshafen (DE)
(72) Erfinder: LORENZ, Daniel, 97688 Bad Kissingen (DE); HÖCHE, Tobias, 97461 Hofheim i. UFr. (DE); DÖGEL, Thomas, 97720 Nüdlingen (DE)
(86) Internationale Anmeldenummer: PCT/EP2013/062554
(87) Internationale Veröffentlichungsnummer: WO 2014/012726

(56) Entgegenhaltungen:
- DE-A1-102011 007 118

## Beschreibung

Die vorliegende Erfindung betrifft eine Drehschwingungsdämpfungsanordnung, für den Antriebsstrang eines Fahrzeugs, umfassend einen zur Drehung um eine Drehachse anzutreibenden Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Koppelanordnung zur Überlagerung der über die Drehmomentübertragungswege geleiteten Drehmomente vorgesehen sind, wobei im ersten Drehmomentübertragungsweg eine Phasenschieberanordnung zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist.

Aus der deutschen Patentanmeldung DE 10 2011 007 118 A1 ist eine gattungsgemäße Drehschwingungsdämpfungsanordnung bekannt, welche das in einen Eingangsbereich beispielsweise durch eine Kurbelwelle eines Antriebsaggregates eingeleitete Drehmoment in einen über einen ersten Drehmomentübertragungsweg übertragenen Drehmomentenanteil und einen über einen zweiten Drehmomentübertragungsweg geleiteten Drehmomentenanteil aufteilt. Bei dieser Drehmomentenaufteilung wird nicht nur ein statisches Drehmoment aufgeteilt, sondern auch die im zu übertragenen Drehmoment enthaltenen Schwingungen bzw. Drehungleichförmigkeiten, beispielsweise generiert durch die periodisch auftretenden Zündungen in einer Antriebsaggregat, werden anteilig auf die beiden Drehmomentübertragungswege aufgeteilt. In einer Koppelanordnung werden die über die beiden Drehmomentübertragungswege übertragenen Drehmomentenanteile wieder zusammengeführt und dann als ein Gesamtdrehmoment in den Ausgangsbereich, beispielsweise eine Reibkupplung oder dergleichen, eingeleitet.

In zumindest einem der Drehmomentübertragungswege ist eine Phasenschieberanordnung vorgesehen, welche nach Art eines Schwingungsdämpfers, also mit einer Primärseite und einer durch die Kompressibilität einer Federanordnung bezüglich dieser verdrehbaren Sekundärseite, aufgebaut ist. Insbesondere dann, wenn dieses Schwingungssystem in einen überkritischen Zustand übergeht, also mit Schwingungen angeregt wird, die über der Resonanzfrequenz des Schwingungssystems liegen, tritt eine Phasenverschiebung von bis zu 180° auf. Dies bedeutet, dass bei maximaler Phasenverschiebung die vom Schwingungssystem abgegebenen Schwingungsanteile bezüglich der vom Schwingungssystem aufgenommenen Schwingungsanteile um 180° phasenverschoben sind. Da die über den anderen Drehmomentübertragungsweg geleiteten Schwingungsanteile keine oder ggf. eine andere Phasenverschiebung erfahren, können die in den zusammengeführten Drehmomentenanteilen enthaltenen und bezüglich einander dann phasenverschobenen Schwingungsanteile einander destruktiv überlagert werden, so dass im Idealfall das in den Ausgangsbereich eingeleitete Gesamtdrehmoment einem ein im Wesentlichen keine Schwingungsanteile enthaltenes statisches Drehmoment ist.

Ausgehend vom erläuterten Stand der Technik ist die Aufgabe der vorliegenden Erfindung, eine Drehschwingungsdämpfungsanordnung, bevorzugt bei Fahrzeugen mit längs angebrachten Antriebsaggregaten und dazu quer verlaufender Antriebswelle, so weiterzubilden, dass diese zwischen der Phasenschieberanordnung und der Koppelanordnung einen axialen Durchgangsraum für die Antriebswelle ausbildet.

Diese Aufgabe wird durch eine gattungsgemäße Drehschwingungsdämpfungsanordnung, welche zusätzlich das kennzeichnende Merkmal des Anspruches 1 umfasst, gelöst.

Gemäß der Erfindung wird diese Aufgabe gelöst durch eine Drehschwingungsdämpfungsanordnung für den Antriebsstrang eines Fahrzeugs, umfassend einen zur Drehung um eine Drehachse anzutreibenden Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine, mit dem Ausgangsbereich in Verbindung stehende Koppelanordnung zur Überlagerung der über die Drehmomentübertragungswege geleiteten Drehmomente vorgesehen sind und wobei im ersten Drehmomentübertragungsweg eine Phasenschieberanordnung zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist.

Dabei sind zumindest ein Teil der Phasenschieberanordnung und die Koppelanordnung zumindest auf einem Teil ihrer radialen Erstreckung gegenseitig axial beabstandet und bilden dadurch einen Durchgangsraum zur Anordnung einer quer zur Drehachse A verlaufenden Antriebswelle des Fahrzeuges, wobei der Durchgangsraum radial außerhalb eines Verbindungsbereiches von Phasenschieberanordnung und Koppelanordnung ausgebildet ist.

Dieser Durchgangsraum trennt die, beispielsweise durch die deutschen Patentanmeldung DE 10 2011 007 118 A1 bekannte kompakte bauräumliche Einheit von Phasenschieberanordnung und Koppelanordnung in zwei separierte Bauräume innerhalb der Drehschwingungsdämpfungsanordnung, wobei die Phasenschieberanordnung und die Koppelanordnung miteinander drehmomentführend verbunden sind. Diese Verbindung zwischen Phasenschieberanordnung und Koppelanordnung kann direkt ausgeführt oder durch einen Verbindungsbereich wie beispielsweise durch einen Verbindungsflansch gebildet sein.

Diese Ausführungsform der axialen Beabstandung von Phasenschieberanordnung zu Koppelanordnung ist besonders vorteilhaft bei Bauraumkonzepten von Kraftfahrzeugen mit längs eingebauten Frontmotoren und Frontantrieb zum Durchführen einer quer verlaufenden Antriebswelle.

Dabei kann eine Primärmasse der Drehschwingungsdämpfungsanordnung drehfest mit zum Beispiel hier der Kurbelwelle und ebenfalls drehfest mit einem Ansteuerblech verbunden sein. Mit einem ebenfalls mit der Kurbelwelle drehfest verbundenen Verbindungsflansch ist ein Planetenträger der Koppelanordnung über vorteilhaft eine Hirth-Verzahnung drehfest verbunden und zentriert. Die Verbindung der Hirth-Verzahnung kann sowohl über eine Zentralschraube als auch durch mehrfach am Umfang angeordnete Schrauben realisiert werden. Diese Komponenten ergeben zusammen mit Planetenrädern eine Primärseite der Leistungsverzweigung. Ein Außenfedersatz der Phasenschieberanordnung wird über zumindest einen Gleitschuh von der Primärmasse angesteuert und ist durch eine Nabenscheibe mit einem radial innerhalb des Außenfedersatzes liegenden Innenfedersatz verbunden. Eine drehfeste Anbindung eines Zwischenflansches an den Innenfedersatz wird radial innerhalb des Innenfedersatzes mittels zumindest einem Abdeckblech realisiert. Dieser ist wiederum mit einem Antriebshohlradträger drehfest verbunden. Liegt nur der Außenfedersatz der Phasenschieberanordnung vor, so überträgt die Nabenscheibe das Drehmoment direkt an den Antriebsholradträger. An dem Antriebshohlradträger befindet sich drehfest ein Antriebshohlrad. Zusätzlich kann eine Zusatzmasse zur Erhöhung des Massenträgheitsmoments drehfest am Antriebsholradträger angebracht werden. Auf einem Planetenradträger, der drehfest mit dem Verbindungsflansch verbunden ist, sind die gestuften oder ungestuften Planetenräder drehbar gelagert. Diese kämmen mit dem Antriebshohlrad und dem Abtriebshohlrad. An das Abtriebshohlrad ist drehfest eine Abtriebsmasse positioniert. An dieser kann beispielsweise über eine Passverzahnung eine drehfeste Verbindung mit der Getriebeeingangswelle hergestellt werden, eine Reibkupplung, ein Wandler oder ein ähnliches Aggregat positioniert werden.

Ein Innenbereich der Drehschwingungsdämpfungsanordnung, der auch als ein gemeinsamer Nassraum von Phasenschieberanordnung und Koppelanordnung bezeichnet werden kann, wird durch ein gemeinsames Dichtelement, das radial zwischen dem Planetenradträger und dem Antriebsholradträger neben einem Lager, das den Planetenradträger gegen den Antriebsholradträger verdrehbar lagert und auf der Seite des Anfahrelementes positioniert ist, in einen Phasenschiebernassraum und einen Koppelnassraum unterteilt. Dabei wird der Nassraum im Bereich der Phasenschieberanordnung durch ein Dichtelement, das radial zwischen dem Zwischenflansch und der radial nach innen gehenden Weiterführung des Ansteuerbleches auf axialer Höhe der Antriebswelle positioniert ist, gegenüber einem Trockenraum, der den Umgebungsraum der Drehschwingungsdämpfungsanordnung bildet, abgedichtet. Im Bereich der Koppelanordnung wird der Nassraum durch eine Dichtung, die vornehmlich als Balgdichtung ausgestaltet ist, und zwischen der Zusatzmasse und der Abtriebsmasse positioniert ist, gegenüber dem Trockenraum abgedichtet.

Die beiden Nassräume, hier der Phasenschiebernassraum und der Koppelnassraum sind bevorzugt mit einem Schmiermittel wie Öle oder Fette zur Reibungsreduzierung befüllt.

Zur Erleichterung der Montage der Zentralschraube der Hirth-Verzahnung ist vorteilhaft eine Durchgriffsöffnung radial mittig an der Abtriebsmasse vorzusehen, welche durch eine Verschlussschraube mit einem Dichtring geschlossen werden kann, um den Austritt von Schmierstoff aus dem Nassraum zu verhindern. Die drehfeste Verbindung des Zwischenflansches mit dem Antriebshohlradträger wird vorteilhaft durch eine Schraubverbindung erfolgen, welche durch eine Montageöffnung am Planetenradträger und durch eine Montageöffnung an der Abtriebsmasse montagefreundlich gestaltet werden kann. Durch eine Verschlussschraube und einem zugehörigen Dichtring kann die Montageöffnung in der Abtriebsmasse verschlossen und dadurch ein Austreten von Schmiermitteln aus dem Koppelnassraum verhindert werden. Die Montageöffnung im Planetenradträger ist zum Ausgleich von unterschiedlichen Verdrehwinkeln zwischen den Komponenten Planetenradträger, Abtriebsmasse und Antriebshohlradträger vorteilhaft in Form eines Langlochs auszuführen.

Der Antriebshohlradträger ist durch ein Lager zu dem Planetenradträger gelagert, der selbst mit dem Verbindungsflansch drehfest, vorteilhaft durch die Hirth-Verzahnung, verbunden und zentriert ist. Ebenso ist über ein Lager die Abtriebsmasse gegenüber dem Planetenradträger gelagert.

Vorteilhafte Ausgestaltungen und Weiterbildungen der Erfindung sind in den abhängigen Ansprüchen angegeben.

In einer vorteilhaften Ausführung umfasst die Koppelanordnung ein erstes und ein zweites Eingangsteil, in die über den ersten und den zweiten Drehmomentübertragungsweg geführte Drehmomente eingeleitet werden, sowie eine Überlagerungseinheit, in der die eingeleiteten Drehmomente wieder zusammengeführt werden und ein Ausgangsteil, das das zusammengeführt Drehmoment zum Beispiel an eine Reibkupplung weiterführt. Das erste Eingangsteil ist in seiner Wirkrichtung auf der einen Seite mit der Phasenschieberanordnung und auf der anderen Seite mit der Überlagerungseinheit verbunden. Das zweite Eingangsteil ist in seiner Wirkrichtung auf der einen Seite mit dem Eingangsbereich und auf der anderen Seite mit der Überlagerungseinheit verbunden. Die Überlagerungseinheit wiederum ist in ihrer Wirkrichtung auf der einen Seite sowohl mit dem ersten als auch mit dem zweiten Eingangsteil und auf der anderen Seite mit dem Ausgangsteil verbunden. Das Ausgangsteil bildet den Ausgangsbereich und kann in einer vorteilhaften Ausgestaltung eine Reibkupplung aufnehmen.

Um in einfacher Art und Weise die Phasenverschiebung in einem der Drehmomentübertragungswege erlangen zu können, wird vorgeschlagen, dass die Phasenschieberanordnung ein Schwingungssystem mit einer Primärmasse und einer gegen die Wirkung einer Federanordnung bezüglich der Primärmasse um die Drehachse A drehbaren Sekundärmasse umfasst. Ein derartiges Schwingungssystem kann also nach Art eines an sich bekannten Schwingungsdämpfers aufgebaut sein, bei dem insbesondere durch Beeinflussung der primärseitigen Masse und der sekundärseitigen Masse bzw. auch der Steifigkeit der Federanordnung die Resonanzfrequenz des Schwingungssystems definiert eingestellt werden kann und damit auch festgelegt werden kann, bei welcher Frequenz ein Übergang in den überkritischen Zustand auftritt.

In einer weiteren vorteilhaften Ausgestaltung der Drehschwingungsdämpfungsanordnung kann die Koppelanordnung bezüglich eines vom Eingangsbereich zum Ausgangsbereich in axialer Richtung verlaufenden Drehmoments in dieser axialen Richtung der Phasenschieberanordnung nachgelagert sein. Durch die axiale Beabstandung der Phasenschieberanordnung zu der Koppelanordnung wird der Durchgangsraum für die Antriebswelle des Kraftfahrzeuges geschaffen. Durch die direkte drehfeste Verbindung der Primärmasse der Phasenschieberanordnung mit dem Eingangsbereich, der zum Beispiel durch eine Kurbelwelle gebildet sein kann, kann eine steife Anbindung der Phasenschieberanordnung und damit eine gute Abstimmbarkeit der Federanordnung in der Phasenschieberanordnung erreicht werden. Der Verlauf des ersten Drehmomentübertragungsweges ist bei dieser Anordnung als vorteilhaft zu sehen, da dieser vom Eingangsbereich über den Phasenschieber, weiter über ein Zwischenelement in die Koppelanordnung und von dort in den Ausgangsbereich geleitet wird.

In einer zu der vorstehend erläuterten alternativen und ebenso vorteilhaften Ausgestaltung der Drehschwingungsdämpfungsanordnung kann die Phasenschieberanordnung bezüglich eines vom Eingangsbereich zum Ausgangsbereich in axialer Richtung verlaufenden Drehmoments in dieser axialen Richtung der Koppelanordnung nachgelagert sein. Diese Anordnung ermöglicht eine direkte und damit steife Anbindung der Koppelanordnung an den Eingangsbereich. Der Drehmomentanteil, der durch die Phasenschieberanordnung läuft muss jedoch erst an der vorgelagerten Koppelanordnung vorbei geleitet werden. Damit wird die Anbindung der Phasenschieberanordnung an den Eingangsbereich weniger steif. Dies kann je nach Auslegung des Schwingungssystems einen Vorteil darstellen.

Eine weitere günstige Ausgestaltung sieht vor, dass die Phasenschieberanordnung taumelweich und drehfest mit dem Eingangsbereich verbunden ist. Dies kann dadurch erfolgen, dass die Primärmasse der Phasenschieberanordnung mit dem Eingangsbereich, der in nachfolgenden Ausführungsbeispielen durch die Kurbelwelle gebildet wird, durch ein Verbindungselement drehfest verbunden ist, vorteilhaft durch eine Schraubverbindung, die wiederum drehfest mit zumindest einer Tangentialblattfeder in Verbindung steht, welche mit einem Verbindungsblech drehfest verbunden ist, das drehfest an die Kurbelwelle zum Beispiel durch eine Schraubverbindung befestigt ist. Die drehfeste Befestigung von dem Verbindungselement an die Tangentialblattfeder und der Tangentialblattfeder an das Verbindungsblech kann vorteilhaft durch eine Nietverbindung, aber auch durch eine Schraubverbindung erfolgen. Durch die taumelweiche Anbindung der Primärmasse an die Kurbelwelle können Achsversatze der Drehschwingungsdämpfungsanordnung zur Kurbelwelle um die Drehachse A ausgeglichen werden.

In einer weiteren vorteilhaften Ausgestaltung kann die Drehschwingungsdämpfungsanordnung ein Massependel aufweisen. Dabei kann das Massependel räumlich im Bereich der Phasenschieberanordnung und oder im Verbindungsbereich zwischen der Phasenschieberanordnung und der Koppelanordnung und außerhalb von Phasenschieberanordnung und von Koppelanordnung und oder im Bereich der Koppelanordnung positioniert sein. Durch die unterschiedlichen Möglichkeiten der Positionierung des Massependels kann auf den zur Verfügung stehenden Bauraum reagiert werden. Bei der Positionierung des Massependels radial außen kann die Dimensionierung des Massependels geringer ausfallen, als bei einer Positionierung weiter radial innen. Bei der Verwendung des Massependels ist es unabhängig, ob in der Phasenschieberanordnung nur ein Außenfedersatz oder ein Außenfedersatz und ein Innenfedersatz oder noch eine zusätzliche Federanordnung im Drehmomentweg zwischen der Phasenschieberanordnung und der Koppelanordnung positioniert ist. Bei der Verwendung des Massependels wird die Entkopplung der Drehungleichförmigkeit verbessert.

Eine weitere günstige Ausgestaltung sieht vor, dass der Innenbereich der Drehschwingungsdämpfungsanordnung, hier gebildet durch die Phasenschieberanordnung und die Koppelanordnung, den gemeinsamen Nassraum ausbilden, wie auch schon vorgehend beschrieben. Der gemeinsame Nassraum wird vorzugsweise zur Reibungsreduzierung mit dem Schmiermittel wie Öl oder Fett befüllt. Da es sich um einen gemeinsamen Nassraum handelt, wird vorzugsweise nur eine Art von Schmiermittel in den Nassraum eingebracht. Dies stellt einen Vorteil bei der Produktion der Drehschwingungsdämpfungsanordnung dar.

In einer weiteren vorteilhaften Ausführungsform bilden die Phasenschieberanordnung und die Koppelanordnung einen Phasenschiebernassraum und einen Koppelnassraum, wie auch schon voranstehend beschrieben. Durch das Ausbilden von zwei Nassräumen, hier der Phasenschiebernassraum und der Koppelnassraum, kann eine unterschiedliche Befüllung mit den Schmiermitteln getätigt werden. Dies ist besonders vorzuziehen, wenn die Phasenschieberanordnung und die Koppelanordnung auf Grund ihrer konstruktiven Auslegung unterschiedliche Schmiermittel benötigen. Dies kann beispielsweise nötig sein, wenn die Koppelanordnung als ein Getrieberadsatz ausgebildet ist, der dünnes Fett benötigt und die Phasenschieberanordnung, die beispielsweise mit einem Federelement und einem Gleitschuh ausgebildet ist, welche bevorzugt mit dickerem Fett betrieben werden. Dabei sind die Verbindungen von Bauteilen, die den Nassraum der Phasenschieberanordnung und der Koppelanordnung mit ausbilden, wie beispielsweise die Verbindung der Primärmasse mit dem Ansteuerblech so auszuführen, dass ein Austritt von Schmiermitteln nicht erfolgen kann.

In einer zu der vorstehend erläuterten alternativen und ebenso vorteilhaften Ausgestaltung der Drehschwingungsdämpfungsanordnung kann der Phasenschiebernassraum und der Koppelnassraum durch ein gemeinsames Dichtelement, wie schon anfangs beschrieben, zueinander abgedichtet werden. Das Dichtelement kann verhindern, dass beispielsweise Schmiermittel, die sich in dem Phasenschiebernassraum befinden, nicht in den Koppelnassraum gelangen können. Dies ist besonders vorteilhaft, wenn auf Grund der konstruktiven Auslegung beispielsweise die Phasenschieberanordnung mit einem zähen Fett zu befüllen ist, hingegen die Koppelanordnung mit einem dünnflüssigen Öl befüllt ist und beide Schmiermittel sich nicht miteinander vermischen sollen.

Im Folgenden werden bevorzugte Ausführungsbeispiele der Erfindung anhand der beiliegenden Figuren erläutert. Es zeigt in:
Fig. 1 eine Drehschwingungsdämpfungsanordnung mit einer axialen Beabstandung von einer Phasenschieberanordnung, die auf Seite eines Antriebsaggregates positioniert ist, und einer Koppelanordnung, die auf Seite eines Anfahrelementes positioniert ist;
Fig. 2 eine Drehschwingungsdämpfungsanordnung wie in Fig. 1, jedoch mit einer taumelweichen Anbindung einer Primärmasse an einem Eingangsbereich und mit einer Abdichtung von einem Nassraum und einem Trockenraum im Bereich eines Innenfedersatzes;
Fig. 3 eine Drehschwingungsdämpfungsanordnung wie in Fig. 1, jedoch als Prinzipskizze und mit einer zusätzlichen Federanordnung zwischen einem Antriebsholradträger und einem Antriebsholrad;
Fig. 4 eine Drehschwingungsdämpfungsanordnung wie in Fig. 1, jedoch als Prinzipskizze und mit einem Massependel am Antriebsholradträger;
Fig. 5 eine Drehschwingungsdämpfungsanordnung wie in Fig. 4, jedoch mit einem Massependel das in Drehmomentrichtung vom Antriebsaggregat kommend, nach dem Außenfedersatz positioniert ist;
Fig. 6 eine Drehschwingungsdämpfungsanordnung wie in Fig. 4, jedoch mit einem Massependel, das an einer Abtriebsmasse positioniert ist;
Fig. 7 eine Drehschwingungsdämpfungsanordnung mit einer Phasenschieberanordnung auf der Seite eines Anfahrelementes und einer Koppelanordnung auf der Seite eines Antriebsaggregates;
Fig. 8 eine Drehschwingungsdämpfungsanordnung wie in Fig. 7, jedoch als Prinzipskizze.

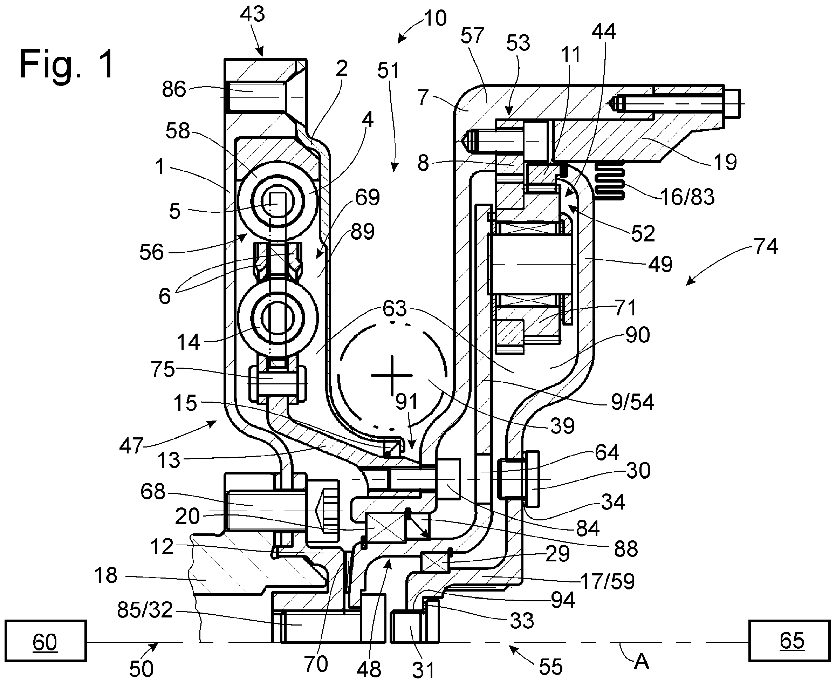

In Fig. 1 ist eine Drehschwingungsdämpfungsanordnung 10 dargestellt, welche nach dem Prinzip der Leistungs- bzw. Drehmomentenaufzweigung arbeitet. Die Drehschwingungsdämpfungsanordnung 10 kann in einem Antriebsstrang eines Fahrzeugs zwischen einem Antriebsaggregat und dem folgenden Teil des Antriebsstrangs, also beispielsweise ein Anfahrelement 65 wie eine Reibungskupplung, ein hydrodynamischer Drehmomentwandler oder dergleichen, angeordnet werden.

Die Drehschwingungsdämpfungsanordnung 10 umfasst einen allgemein mit 50 bezeichneten Eingangsbereich. Dieser Eingangsbereich 50 kann beispielsweise durch eine Verschraubung 68 an einer Kurbelwelle 18 eines als Verbrennungskraftmaschine ausgebildeten Antriebsaggregates 60 angebunden werden. Im Eingangsbereich 50 zweigt sich das von dem Antriebsaggregat 60 aufgenommene Drehmoment in einen ersten Drehmomentübertragungsweg 47 und einen zweiten Drehmomentübertragungsweg 48 auf. Im Bereich einer allgemein mit der Bezugsziffer 44 bezeichneten Koppelanordnung werden die über die beiden Drehmomentübertragungswege 47, 48 geleiteten Drehmomentenanteile mittels eines ersten Eingangsteils 53 und eines zweiten Eingangsteils 54 in die Koppelanordnung 44 eingeleitet und wieder zusammengeführt und dann zu einem Ausgangsbereich 55 weitergeleitet.

In dem ersten Drehmomentübertragungsweg 47 ist ein allgemein mit der Bezugsziffer 56 bezeichnetes Schwingungssystem integriert. Das Schwingungssystem 56 ist als Phasenschieberanordnung 43 wirksam und umfasst eine, beispielsweise an das Antriebsaggregat 60, anzubindende Primärmasse 1, sowie ein das Drehmoment weiterleitendes Zwischenelement 57, hier als Zwischenmasse ausgebildet. Die Primärmasse 1 und eine Ansteuerblech 2, welche drehfest, bevorzugt mittels einer Schraubverbindung 86, miteinander verbunden sind, umschließen nach radial außen hin im Wesentlichen vollständig einen Raumbereich 69, in welchem in Bezug auf die radiale Anordnung ein Außenfedersatz 4 und ein Innenfedersatz 14 für das Schwingungssystem 56 aufgenommen ist. Der Außenfedersatz 4 umfasst eine Mehrzahl von in Umfangsrichtung aufeinander folgenden und ggf. auch ineinander geschachtelt angeordneten Federeinheiten 58, wobei jede Federeinheit 58 vorzugsweise wenigstens eine Schraubendruckfeder umfasst. Der Innenfedersatz 14 umfasst ebenfalls in der Regel eine Mehrzahl von in Umfangsrichtung aufeinander folgenden Federeinheiten, die vornehmlich wenigstens eine Schraubenfeder enthalten. Die Federeinheit 58 des Außenfedersatzes 4 stützt sich einerseits an der Primärmasse 1 und andererseits an einer als Zentralscheibe ausgebildeten Nabenscheibe 5 ab. Der Innenfedersatz 14 stützt sich einerseits an der Nabenscheibe 5 und andererseits an zumindest einem Abdeckblech 6 ab. Das Abdeckblech ist drehfest, vorzugsweise durch eine Nietverbindung 75, mit einem Zwischenflansch 13 verbunden, welcher wiederum drehfest mit dem Zwischenelement 57, die das erste Eingangsteil 53 der Koppelanordnung bildet, und vornehmlich durch eine Schraubverbindung 84 verbunden ist. Das Zwischenelement 57 leitet das erste Drehmoment als erster Drehmomentübertragungsweg 47 über das Antriebsholrad 8, das drehfest mit dem Antriebsholradträger 7 verbunden ist, in die Koppelanordnung 44 ein.

In einer weiteren, hier nicht gezeigten Ausführungsform kann der Innenfedersatz 14 nicht vorhanden sein. Ist dies der Fall, so ist die Nabenscheibe 5 drehfest mit dem Zwischenelement 57 verbunden und das Drehmoment wird von dem Außenfedersatz 4 über die Nabenscheibe 5 direkt an das Zwischenelement 57 und von dort über das Antriebsholrad 8 in die Koppelanordnung 44 weitergeleitet.

Im zweiten Drehmomentübertragungsweg 48, ausgehend von dem Antriebsaggregat 60, wird das Drehmoment über die Kurbelwelle 18 in das zweite Eingangsteil 54 geleitet. Dieses ist drehfest mit der Kurbelwelle 18, vornehmlich durch eine Schraubverbindung 85, hier als Zentralschraube 32 ausgebildet, mit einer Hirth-Verzahnung 70 verbunden und bildet den Planetenradträger 9 der Koppelanordnung 44. Die Planetenräder 71 der Koppelanordnung 44, die drehbar am Planetenradträger 9 positioniert sind, führen den ersten Drehmomentübertragungsweg 47, der über das Antriebsholrad 8 in die Koppelanordnung 44 geleitet wird und den zweiten Drehmomentübertragungsweg 48, der über das zweite Eingangsteil 54, gebildet von dem Planetenradträger 9, geleitet wird, zu einem Drehmoment zusammen. Das zusammengeführt Drehmoment wird über das Abtriebsholrad 11, das drehfest mit der Sekundärmasse 59 verbunden ist, an die Sekundärmasse 59, die das Ausgangsteil 49 bildet, weitergeleitet und von da zum Beispiel an eine, hier nicht dargestellte, Reibkupplung abgegeben.

Zwischen einer Zusatzmasse 19 und einer Abtriebsmasse 17 ist eine Dichtung 83, hier als eine Balgdichtung 16 ausgebildet, angebracht, die eine reibmomentarme Abdichtung ermöglicht. Ist die Zusatzmasse 19 nicht vorhanden, so kann die Dichtung 83 auch zwischen dem Antriebsholradträger 7 und der Abtriebsmasse 17 positioniert werden. Zusammen mit einem Dichtelement 15, das radial zwischen dem Ansteuerblech 2 und dem Zwischenflansch 13 positioniert ist, dichten das Dichtelement 15 und die Balgdichtung 16 einen Nassrauraum, der den Innenbereich der Drehschwingungsdämpfungsanordnung 10 bildet und bevorzugt mit Fett oder ähnlichen reibungsminimierenden Mitteln wie Öl befüllt werden kann, von einem Trockenraum 74, der den umgebenden Raum der Drehschwingungsdämpfungsanordnung 10 bildet, ab. Dabei unterteilt das Dichtelement 88, das radial zwischen dem Planetenradträger 9 und dem Antriebsholradträger 7 und axial neben einem Lager 20, welches den Planetenradträger 9 zu dem Antriebsholradträger 7 verdrehbar lagert, positioniert ist, die Drehschwingungsdämpfungsanordnung 10 in einen Phasenschiebernassraum 89 und einen Koppelnassraum 90. Durch diese Unterteilung in zwei Nassräume können die jeweiligen Nassräume schmierungspezifisch befüllt werden. Bevorzugt wird der Phasenschiebernassraum 89 mit Fett befüllt, der Koppelnassraum 90 mit Öl.

In einer nicht dargestellten Ausführungsform kann das Dichtelement 88 entfallen. Ist dies der Fall, sind der Phasenschiebernassraum 89 und der Koppelnassraum 90 miteinander verbunden. Diese beiden Nassräume können in diesem Fall mit einem Schmiermittel, wie Öl oder Fett, das für beide Nassräume wirksam ist, befüllt werden. Durch diese Ausführungsform kann das Befüllen in der Produktion erleichtert werden.

Im Gegensatz zu den bekannten Ausführungsformen von Drehschwingungsdämpfungsanordnungen, wie auch in DE 10 2011 007 118 A1 offengelegt, bei denen die Phasenschieberanordnung und die Koppelanordnung einen kompakten, auf axiale Ausdehnung minimierten Bauraum bilden, ist die hier dargestellte Ausgestaltung der axialen Anordnung von der Phasenschieberanordnung 43 und der Koppelanordnung 44 derart beabstandet, dass durch diese Beabstandung der Phasenschieberanordnung 43 und der Koppelanordnung 44 ein Durchgangsraum 51 zur Anordnung einer quer zur Drehachse (A) verlaufenden Antriebswelle 39 eines Fahrzeuges ausbildet wird. Dabei kann, wie hier gezeigt, die Phasenschieberanordnung 43 im Ganzen von der Koppelanordnung 44 beabstandet sein. In einer noch später zu zeigenden Ausführungsform kann die Phasenschieberanordnung 43 auch nur zum Teil zu der Koppelanordnung 44 beabstandet sein.

Die Antriebswelle 39 verläuft quer zur Drehachse (A). Die Antriebswelle 39 kann dabei unterschiedliche Winkel zur Drehachse (A) einnehmen. Eine parallele Anordnung von der Antriebswelle 39 zur Drehachse (A) ist damit ausgeschlossen.

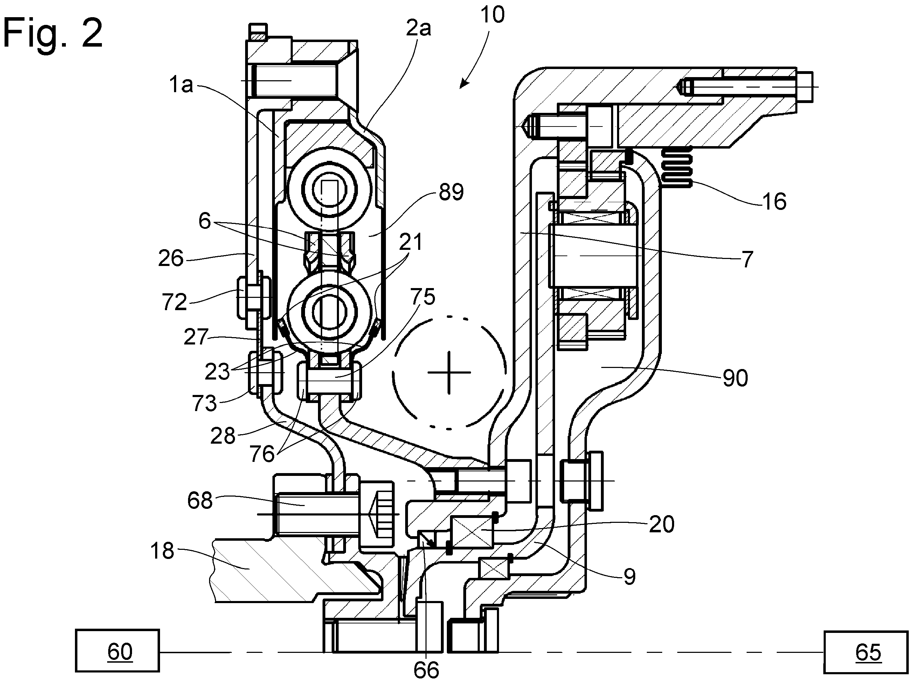

In Fig. 2 ist eine Drehschwingungsdämpfungsanordnung 10 wie in Fig. 1 dargestellt, jedoch mit einer taumelweichen Anbindung der Primärmasse 1 a an die Kurbelwelle 18 und einer Abdichtung des Phasenschiebernassraumes 89 mittels zweier Dichtlippen 21.

Die taumelweiche Anbindung wird dadurch erreicht, dass die Primärmasse 1 a drehfest mit einem Verbindungselement 26 verbunden ist. Dieses Verbindungselement 26 ist mit zumindest einer Tangentialblattfeder 27, vornehmlich mittels einer Nietverbindung 72, verbunden. Die Tangentialblattfeder 27 ist radial innen drehfest mit zumindest einem gekröpften Verbindungsblech 28, vornehmlich mittels einer Nietverbindung 73, verbunden. Das Verbindungsblech 28 wird vorzugsweise mittels der Verschraubung 68 drehfest an die Kurbelwelle 18 positioniert. Diese Ausführungsform ermöglicht den Ausgleich eines Versatzes der Drehachse von der Drehschwingungsdämpfungsanordnung 10 und einem Anfahrelement.

Der Phasenschiebernassraum 89, der vornehmlich durch die Primärmasse 1 und dem Ansteuerblech 2 gebildet wird, wird durch zwei Dichtlippen 21, die an zwei Dichtblechen 23 aufgenommen werden, abgedichtet. Die zwei Dichtbleche 23 werden beidseitig des Zwischenflansches 13 mit den Abdeckblechen 6 drehfest vornehmlich mittels einer Nietverbindung 75 in der Form verbunden, dass sich die Dichtbleche 23 jeweils zwischen dem Nietkopf 76 und dem Abdeckblech 6 befinden. Die Dichtlippen 21 liegen jeweils an der radial nach innen sich erstreckenden Verlängerung der Primärmasse 1a und des Ansteuerbleches 2a an. Der Phasenschiebernassraum 89 wird bevorzugt mit Fett oder einem ähnlichen Schmiermittel befüllt.

Der Koppelnassraum 90 wird einerseits, wie in Fig. 1 beschrieben, durch die Balgdichtung 16 und andererseits durch ein Dichtelement 66, das radial zwischen dem Planetenträger 9 und dem Antriebsholradträger 7, axial neben dem Lager 20 auf Seite der Verschraubung 68 positioniert ist, abgedichtet.

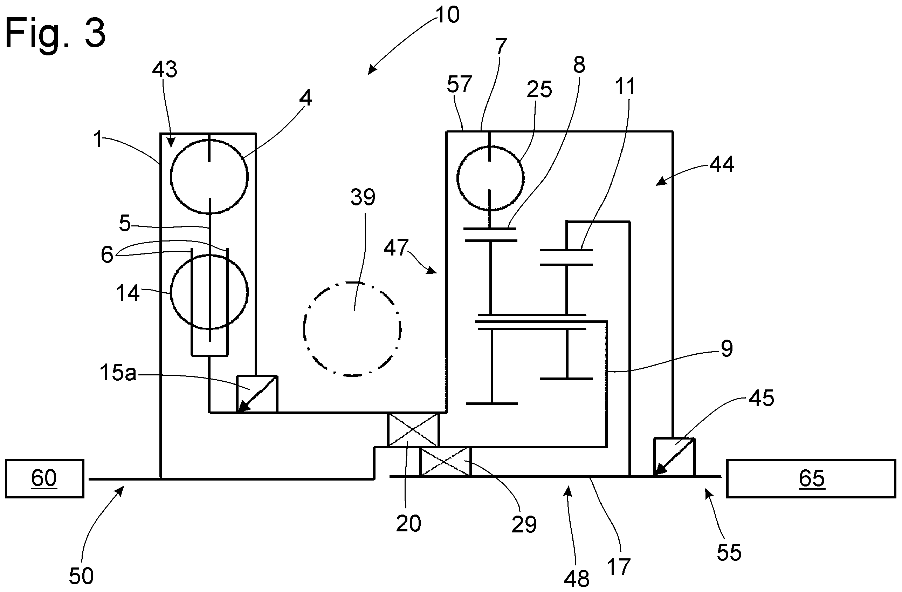

In Fig. 3 ist eine Drehschwingungsdämpfungsanordnung 10 wie in Fig. 1 dargestellt, jedoch als Prinzipskizze und mit dem Unterschied, dass die Phasenschieberanordnung 43 nur zum Teil zu der Koppelanordnung 44 axial beabstandet ist, um Raum für eine Antriebswelle 39 zu schaffen. Dabei ist die Phasenschieberanordnung 43 zum Teil auf der Seite des Antriebsaggregates 60, die Koppelanordnung 44 hingegen auf der Seite des Anfahrelementes 65 positioniert. Im Bereich der Koppelanordnung 44 ist eine zusätzliche Federanordnung 25 positioniert. Die zusätzliche Federanordnung 25 kann bevorzugt zwischen dem Antriebsholrad 8, das drehfest mit dem Antriebsholradträger 7 verbunden ist und hier das Zwischenelement 57 bildet und dem Innenfedersatz 14 positioniert werden. Die zusätzliche Federanordnung 25 verbessert die Entkoppelung der Drehungleichförmigkeiten und erhöht die speicherbare Rotationsenergie. Daher ist die zusätzliche Federanordnung von ihrer Wirkweise der Phasenschieberanordnung zugeordnet. Die Position kann sich, wie hier gezeigt, aber außerhalb der Phasenschieberanordnung innerhalb der Koppelanordnung befinden. In einer hier nicht gezeigten Variante, ist es auch möglich, die zusätzliche Federanordnung 25 radial innerhalb der Koppelanordnung 44 zu positionieren. Die Abdichtung des Innenbereiches der Drehschwingungsdämpfungsanordnung erfolgt durch ein Dichtelement 45 im Bereich der Koppelanordnung und durch ein Dichtelement 15a im Bereich der Phasenschieberanordnung.

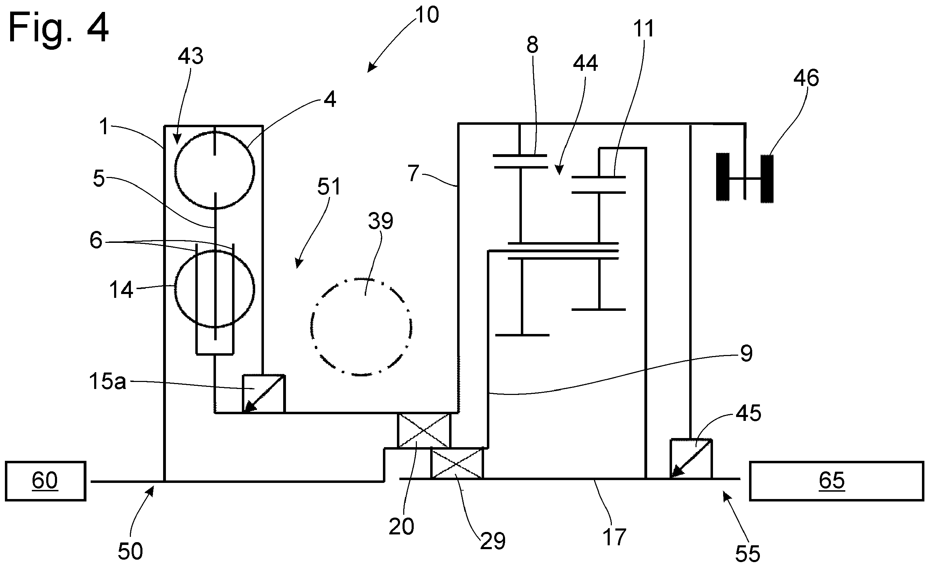

In Fig. 4 ist eine Drehschwingungsdämpfungsanordnung 10 wie in Fig. 3 dargestellt, jedoch ohne die zusätzliche Federanordnung 25 aber mit einem Massependel 46, das an dem Antriebsholradträger 7 positioniert ist. Das Massependel 46 kann sowohl frequenzvariabel als auch frequenzfest ausgeführt werden. Das Massependel 46 verbessert die Entkoppelung der Drehungleichförmigkeit durch Anregung einer oder mehrerer höherer Motorordnungen, wodurch die Signalstärke steigt und die Auslöschung begünstigt wird. In einer nicht gezeigten Ausführungsform kann das Massependel 46 auch innerhalb der Koppelanordnung 44 positioniert werden.

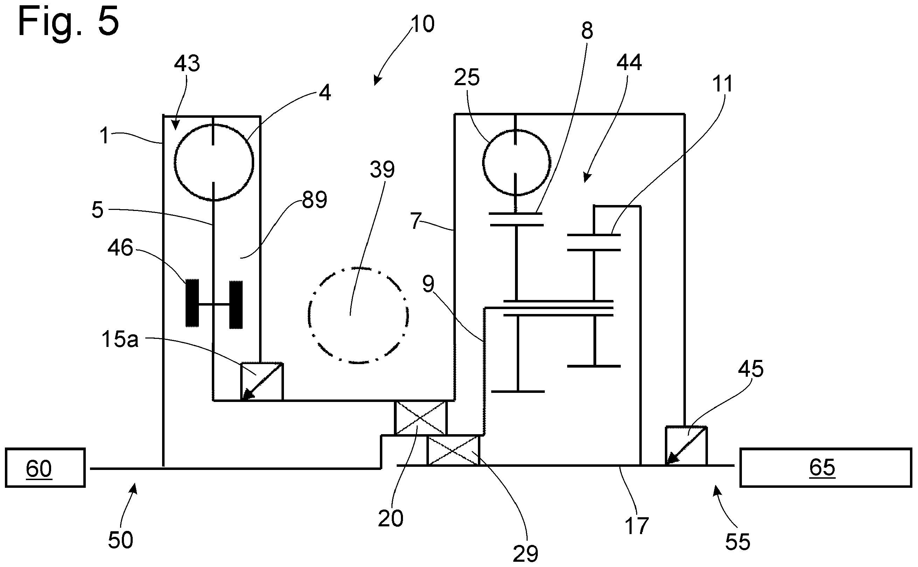

In Fig. 5 ist eine Drehschwingungsdämpfungsanordnung 10 wie in Fig. 4 dargestellt, jedoch ohne den Innenfedersatz 14 aber mit einem Massependel 46, das zwischen dem Außenfedersatz 4 und der zusätzlichen Federanordnung 25 im Bereich des Phasenschiebernassraumes 89 an der Nabenscheibe 5 positioniert ist. Auch dieses Massependel 46 kann sowohl als frequenzvariabel oder frequenzfest ausgeführt werden. Das Massependel 46 verbessert die Entkoppelung der Drehungleichförmigkeit durch Anregung einer oder mehrerer höherer Motorordnungen, wodurch die Signalstärke steigt und die Auslöschung begünstigt wird.

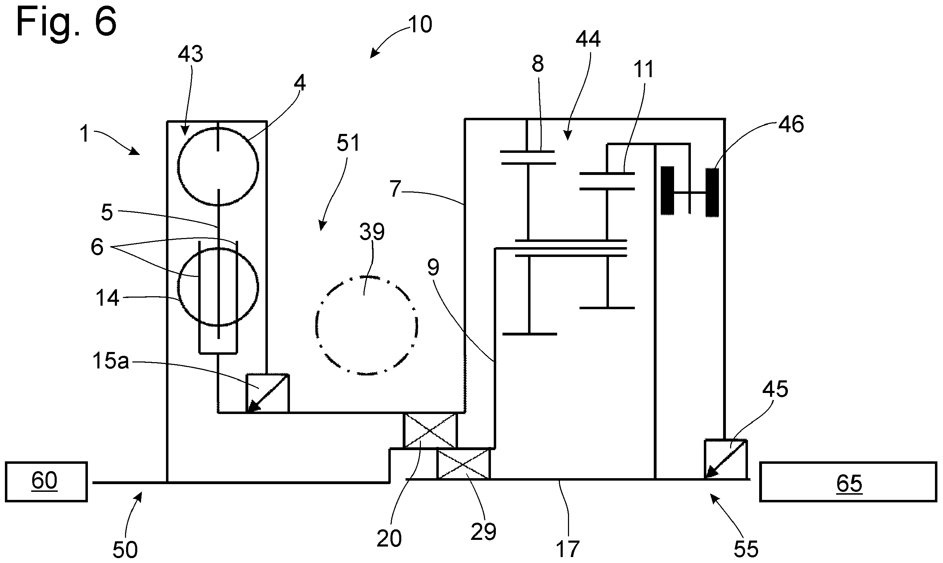

In Fig. 6 ist eine Drehschwingungsdämpfungsanordnung 10 wie in Fig. 4 dargestellt, jedoch mit einem Massependel 46, das an der Abtriebsmasse 17 beispielsweise im radialen Bereich des Abtriebsholrades 11 positioniert ist. Durch dieses Massependel 46 kann die Entkopplung der Drehungleichförmigkeit am Abtrieb bei Drehzahlen von größer / gleich 1200 U/min bis Maximaldrehzahl verbessert werden.

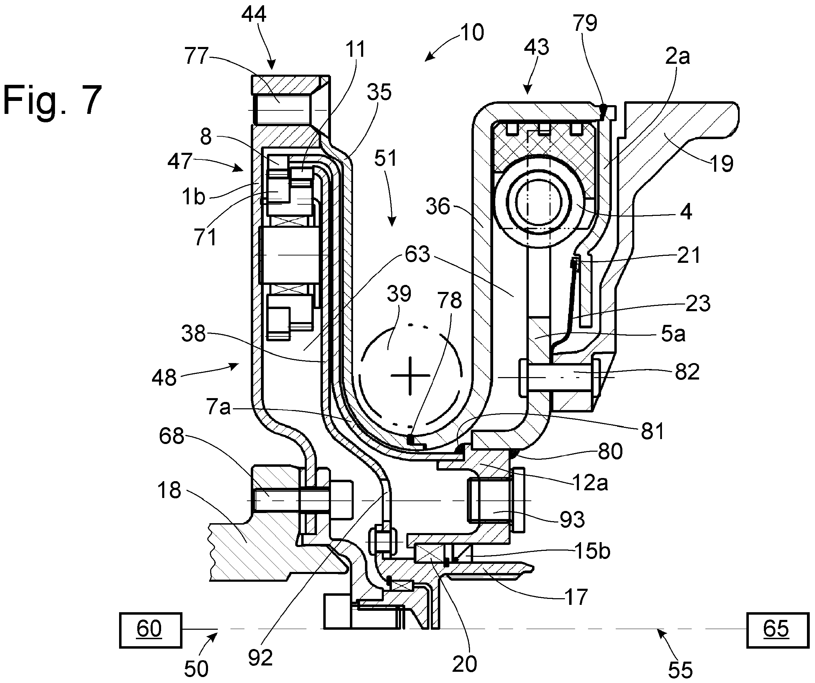

In Fig. 7 ist eine Drehschwingungsdämpfungsanordnung 10 von der funktionsweise wie in Fig. 1 dargestellt, jedoch befindet sich die Koppelanordnung 44 auf der Seite des Antriebsaggregats 60 und die von der Koppelanordnung 44 beabstandete Phasenschieberanordnung 43 auf der Seite des Anfahrelementes 65.

Auch bei dieser Ausführungsform wird durch die Beabstandung der Phasenschieberanordnung 43 und der Koppelanordnung 44 ein Durchgangsraum 51 für zumindest eine Antriebswelle eines Fahrzeuges ausgebildet.

Der erste Drehmomentübertragungsweg 47 verläuft über die Primärmasse1b, die drehfest, vornehmlich mittels der Verschraubung 68 mit dem Eingangsbereich 50, hier gebildet durch die Kurbelwelle 18 der Antriebsaggregat 60 verbunden ist. Von der Primärmasse 1 b wird das erste Drehmoment in ein erstes Verbindungsblech 35 geleitet, das drehfest, vornehmlich mit einer Verschraubung 77, mit der Primärmasse 1 b verbunden ist. Ein zweites Verbindungsblech 36, das drehfest, bevorzugt mittels einer Schweißverbindung 78, mit dem ersten Verbindungsblech 35 verbunden ist leitet das erste Drehmoment vom ersten Verbindungsblech 35 weiter. In einer nicht dargestellten Ausführungsform können das erste Verbindungsblech 35 und das zweite Verbindungsblech 36 als eine einteilige Ausführungsform in Form eines einteiligen Verbindungsbleches, bevorzugt als Blechumformteil, kostengünstig hergestellt werden. Das erste Verbindungsblech 35 und das zweite Verbindungsblech 36, oder im Falle einer einteiligen Ausführungsform das einteilige Verbindungsblech, sind in der Form ausgestaltet, dass sie einen Raumbereich der Koppelanordnung 44 und der Phasenschieberanordnung 43 so umschließen, dass ein Durchgangsraum 51 für zumindest eine Antriebswelle 39 eines Fahrzeuges ausgebildet wird.

Das zweite Verbindungsblech 36, das mit dem Ansteuerblech 2a, bevorzugt mittels einer Schweißverbindung 79 drehfest verbunden ist, leitet das erste Drehmoment einseitig in Wirkrichtung des Außenfedersatzes 4 in den Außenfedersatz 4 der Phasenschieberanordnung 43 ein. Von dem Außenfedersatz 4 wird das erste Drehmoment in eine Nabenscheibe 5a eingeleitet, die drehfest, vornehmlich mittels einer Schweißverbindung 80 mit einem Verbindungsflansch 12a verbunden ist. Von dort wird das erste Drehmoment an einen Antriebsholradträger 7a geleitet, der drehfest, in einer bevorzugten Ausführungsform mittels einer Schweißverbindung 81, mit dem Verbindungsflansch 12a verbunden ist. Der Antriebsholradträger 7a gibt das erste Drehmoment über das Antriebsholrad 8, das drehfest mit dem Antriebsholradträger 7a verbunden ist an die Koppelanordnung 44 weiter.

Der zweite Drehmomentübertragungsweg 48 führt das zweite Drehmoment von der Kurbelwelle 18 in die Primärmasse 1 b. An der Primärmasse 1 b sind die Planetenräder 71 der Koppelanordnung 44 drehbar gelagert. Das zweite Drehmoment gelangt von der Primärmasse 1 b an die Planetenräder 71, wo es mit dem ersten Drehmoment, das über das Antriebsholrad 8 in die Planetenräder 71 und damit in das Koppelgetriebe 44 geleitet wird, wieder zusammengeführt wird. Das zusammengeführte Drehmoment wird über das Abtriebsholrad 11, das drehfest mit dem Abtriebsblech 38 verbunden ist, an die Abtriebsmasse 17, die drehfest mit dem Abtriebsblech 38, vornehmlich durch eine Nietverbindung 87, verbunden ist, weiter geleitet. Von dort kann das zusammengeführte Drehmoment an das Anfahrelement 65, wie zum Beispiel eine Reibkupplung, weiter gegeben werden.

Die Abdichtung des Nassraumes 63 der Drehschwingungsdämpfungsanordnung 10 wird durch das Dichtelement 15b, das radial innen zwischen der Abtriebsmasse 17 und dem Verbindungsflansch 12a positioniert ist und durch eine Dichtlippe 21, die von mindestens einem Dichtblech 23 gehalten wird, das drehfest mit der Nabenscheibe 5, bevorzugt durch die Nietverbindung 82, verbunden ist und mit der Dichtlippe gegen das Ansteuerblech 2a abdichtet, getätigt. Zur besseren Montage der Verschraubung 68 an die Kurbelwelle 18 kann an das Abtriebsblech 38 und an dem Verbindungsflansch 12a im radialen Bereich der Verschraubung 68 jeweils eine Durchgriffsöffnung 92 und 93 angebracht werden, durch die die Verschraubung 68 eingeführt werden kann. Dabei kann die Durchgriffsöffnung 93 am Verbindungsflansch 12a vorteilhaft mittels einer Verschlussschraube 31 und einem Dichtring 34 wieder verschlossen werden um den Austritt von Fett, Öl oder eines anderen Schmiermittels aus dem Nassraum 63 zu verhindern.

Der Vorteil der Positionierung der Koppelanordnung 44 auf der Seite der Antriebsaggregat 60 liegt darin, dass die Planetenräder 71 sehr steif mit der Kurbelwelle 18 verbunden werden können. Dadurch resultiert ein steifer Weg des zweiten Drehmomentes.

Weiter kann eine große Zusatzmasse 19 mit einem großen Massenträgheitsmoment an der Nabenscheibe 5, vornehmlich mittels einer Nietverbindung 82, drehfest verbunden werden.

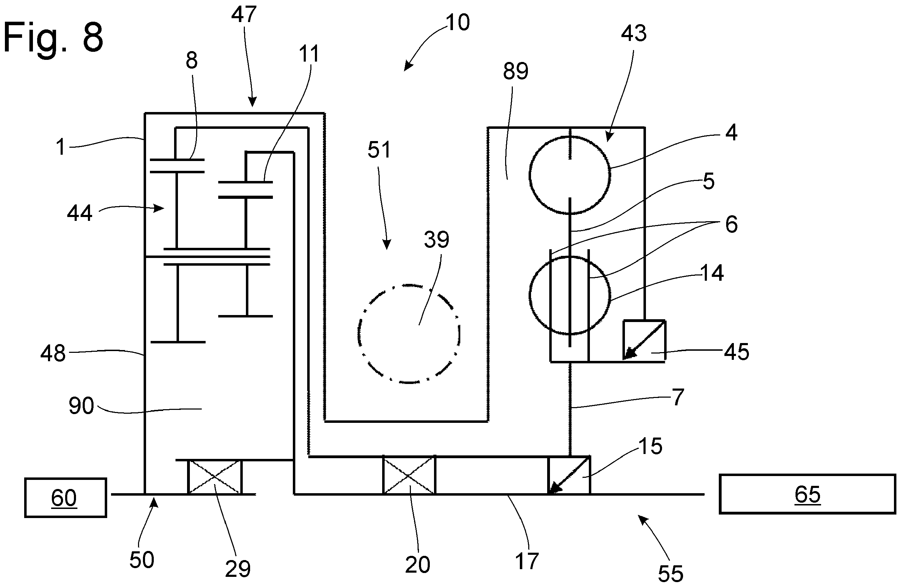

In Fig. 8 ist eine Drehschwingungsdämpfungsanordnung 10 wie in Fig. 7 dargestellt, jedoch als Prinzipskizze. In einer nicht gezeigten Ausführung kann auch bei dieser Drehschwingungsdämpfungsanordnung 10 ein, wie in Fig. 4 und 5 gezeigtes Massependel am Antriebsholradträger 7 und oder an der Nabenscheibe 5 positioniert werden.

### Bezugszeichen

- 1: Primärmasse
- 1a: Primärmasse
- 1b: Primärmasse
- 2: Ansteuerblech
- 2a: Ansteuerblech
- 4: Außenfedersatz
- 5: Nabenscheibe
- 5a: Nabenscheibe
- 6: Abdeckblech
- 7: Antriebsholradträger
- 7a: Antriebsholradträger
- 8: Antriebsholrad
- 9: Planetenradträger
- 10: Drehschwingungsdämpfungsanordnung
- 11: Abtriebsholrad
- 12: Verbindungsflansch
- 12a: Verbindungsflansch
- 13: Zwischenflansch
- 14: Innenfedersatz
- 15: Dichtelement
- 15a: Dichtelement
- 15b: Dichtelement
- 16: Balgdichtung
- 17: Abtriebsmasse
- 18: Kurbelwelle
- 19: Zusatzmasse
- 20: Lager
- 21: Dichtlippe
- 22: Dichtblech
- 23: Dichtblech
- 24: Verbindungsstück
- 25: zusätzliche Federanordnung
- 26: Verbindungselement
- 27: Tangentialblattfeder
- 28: Verbindungsblech
- 29: Lager
- 30: Verschlussschraube
- 31: Verschlussschraube
- 32: Zentralschraube
- 33: Dichtring
- 34: Dichtring
- 35: erstes Verbindungsblech
- 36: zweites Verbindungsblech
- 38: Abtriebsblech
- 39: Antriebswelle
- 43: Phasenschieberanordnung
- 44: Koppelanordnung
- 45: Dichtelement
- 46: Massependel
- 47: erster Drehmomentübertragungsweg
- 48: zweiter Drehmomentübertragungsweg
- 49: Ausgangsteil
- 50: Eingangsbereich
- 51: Durchgangsraum
- 52: Überlagerungseinheit
- 53: erstes Eingangsteil
- 54: zweites Eingangsteil
- 55: Ausgangsbereich
- 56: Schwingungssystem
- 57: Zwischenelement
- 58: Federeinheit
- 59: Sekundärmasse
- 60: Antriebsaggregat
- 63: Nassraum
- 64: Montageöffnung
- 65: Anfahrelement
- 66: Dichtelement
- 68: Verschraubung
- 69: Raumbereich
- 70: Hirth-Verzahnung
- 71: Planetenräder
- 72: Nietverbindung
- 73: Nietverbindung
- 74: Trockenraum
- 75: Nietverbindung
- 76: Nietkopf
- 77: Verschraubung
- 78: Schweißverbindung
- 79: Schweißverbindung
- 80: Schweißverbindung
- 81: Schweißverbindung
- 82: Nietverbindung
- 83: Dichtung
- 84: Schraubverbindung
- 85: Schraubverbindung
- 86: Schraubverbindung
- 87: Nietverbindung
- 88: Dichtelement
- 89: Phasenschiebernassraum
- 90: Koppelnassraum
- 91: Verbindungsbereich
- 92: Durchgriffsöffnung
- 93: Durchgriffsöffnung

## Patentansprüche

1. Drehschwingungsdämpfungsanordnung (10) für den Antriebsstrang eines Kraftfahrzeugs, umfassend
- einen zur Drehung um eine Drehachse (A) anzutreibenden Eingangsbereich (50) und einen Ausgangsbereich (55) und
- einen ersten Drehmomentübertragungsweg (47) und parallel dazu einen zweiten Drehmomentübertragungsweg (48), die beide von dem Eingangsbereich (50) ausgehen und
- eine, mit dem Ausgangsbereich (55) in Verbindung stehende Koppelanordnung (44) zur Überlagerung der über die Drehmomentübertragungswege (47; 48) geleiteten Drehmomente und
- eine Phasenschieberanordnung (43) für den ersten Drehmomentübertragungsweg (47) zur Erzeugung einer Phasenverschiebung von über den ersten Drehmomentübertragungsweg (47) geleiteten Drehungleichförmigkeiten bezüglich über den zweiten Drehmomentübertragungsweg (48) geleiteten Drehungleichförmigkeiten
**dadurch gekennzeichnet, dass** zumindest ein Teil der Phasenschieberanordnung (43) und die Koppelanordnung (44) zumindest auf einem Teil ihrer radialen Erstreckung gegenseitig axial beabstandet sind und dadurch einen Durchgangsraum (51) zur Anordnung einer quer zur Drehachse (A) verlaufenden Antriebswelle des Fahrzeuges ausbilden, wobei der Durchgangsraum (51) radial außerhalb eines Verbindungsbereiches von Phasenschieberanordnung (43) und Koppelanordnung (44) ausgebildet ist.

2. Drehschwingungsdämpfungsanordnung (10) nach Anspruch 1, **dadurch gekennzeichnet, dass** die Koppelanordnung (44) ein erstes Eingangsteil (53), ein zweites Eingangsteil (54), eine Überlagerungseinheit (52) und ein Ausgangsteil (49) umfasst, wobei das erste Eingangsteil (53) mit der Phasenschieberanordnung (43) und der Überlagerungseinheit (52) verbunden ist und das zweite Eingangsteil (54) mit dem Eingangsbereich (50) und der Überlagerungseinheit (52) verbunden ist und die Überlagerungseinheit (52) sowohl mit dem ersten Eingangsteil (53), als auch mit dem zweiten Eingangsteil (54) und dem Ausgangsteil (49) verbunden ist und wobei das Ausgangsteil (49) den Ausgangsbereich (55) bildet.

3. Drehschwingungsdämpfungsanordnung (10) nach Anspruch 1 oder 2, **dadurch gekennzeichnet, dass** die Phasenschieberanordnung (43) ein Schwingungssystem (56) mit einer Primärmasse (1) und einer gegen die Wirkung einer Federanordnung (4) bezüglich der Primärmasse (1) um die Drehachse (A) drehbare Zwischenelement (57) umfasst.

4. Drehschwingungsdämpfungsanordnung (10) nach einem der Ansprüche 1 bis 3, **dadurch gekennzeichnet, dass** bezüglich eines vom Eingangsbereich (50) zum Ausgangsbereich (55) in axialer Richtung verlaufenden Drehmoments die Koppelanordnung (44) in dieser axialen Richtung räumlich der Phasenschieberanordnung (43) nachgelagert ist.

5. Drehschwingungsdämpfungsanordnung (10) nach einem der Ansprüche 1 bis 3, **dadurch gekennzeichnet, dass** bezüglich eines vom Eingangsbereich (50) zum Ausgangsbereich (55) in axialer Richtung verlaufenden Drehmoments die Phasenschieberanordnung (43) in dieser axialen Richtung räumlich der Koppelanordnung (44) nachgelagert ist.

6. Drehschwingungsdämpfungsanordnung (10) nach einem der Ansprüche 1 bis 4, **dadurch gekennzeichnet, dass** die Phasenschieberanordnung (43) taumelweich und drehfest mit dem Eingangsbereich (50) verbunden ist.

7. Drehschwingungsdämpfungsanordnung (10) nach einem der Ansprüche 1 bis 6, **dadurch gekennzeichnet, dass** die Drehschwingungsdämpfungsanordnung (10) ein Massependel (46) aufweist.

8. Drehschwingungsdämpfungsanordnung (10) nach einem der Ansprüche 1 bis 7, **dadurch gekennzeichnet, dass** die Phasenschieberanordnung (43) und die Koppelanordnung (44) einen gemeinsamen Nassraum (63) ausbilden.

9. Drehschwingungsdämpfungsanordnung (10) nach einem der Ansprüche 1 bis 7, **dadurch gekennzeichnet, dass** die Phasenschieberanordnung (43) und die Koppelanordnung (44) einen Phasenschiebernassraum (89) und einen Koppelnassraum (90) ausbilden.

10. Drehschwingungsdämpfungsanordnung (10) nach Anspruch 9, **dadurch gekennzeichnet, dass** der Phasenschiebernassraum (89) und der Koppelnassraum (90) durch ein gemeinsames Dichtelement (88) zueinander abgedichtet sind.

## Claims

1. Rotational vibration damping arrangement (10) for the drive train of a motor vehicle, comprising
- an input region (50), to be driven in order to rotate about a rotational axis (A), and an output region (55), and
- a first torque transmission path (47) and parallel thereto a second torque transmission path (48), which both start from the input region (50), and
- a clutch arrangement (44) which is connected to the output region (55) and has the purpose of superimposing the torques which are conducted via the torque transmission paths (47; 48), and
- a phase shifter arrangement (43) for the first torque transmission path (47) for generating a phase shift of rotational irregularities, directed via the first torque transmission path (47), with respect to rotational irregularities directed via the second torque transmission path (48),
**characterized in that** at least one part of the phase shifter arrangement (43) and the clutch arrangement (44) are spaced apart axially from one another at least on one part of a radial extent thereof and as a result form a passage space (51) for the arrangement of a driveshaft of the vehicle which runs transversely with respect to the rotational axis (A), wherein the passage space (51) is formed radially outside a connecting region of phase shifter arrangement (43) and clutch arrangement (44).

2. Rotational vibration damping arrangement (10) according to Claim 1, **characterized in that** the clutch arrangement (44) comprises a first input part (53), a second input part (54), a superimposition unit (52) and an output part (49), wherein the first input part (53) is connected to the phase shifter arrangement (43) and to the superimposition unit (52), and the second input part (54) is connected to the input region (50) and to the superimposition unit (52), and the superimposition unit (52) is connected to the first input part (53), to the second input part (54) and to the output part (49), and wherein the output part (49) forms the output region (55).

3. Rotational vibration damping arrangement (10) according to Claim 1 or 2, **characterized in that** the phase shifter arrangement (43) comprises a vibration system (56) with a primary mass (1) and an intermediate element (57) which can rotate with respect to the primary mass (1) about the rotational axis (A) counter to the effect of a spring arrangement (4).

4. Rotational vibration damping arrangement (10) according to one of Claims 1 to 3, **characterized in that** the clutch arrangement (44) is arranged spatially downstream of the phase shifter arrangement (43) in an axial direction, with respect to a torque running from the input region (50) to the output region (55) in this axial direction.

5. Rotational vibration damping arrangement (10) according to one of Claims 1 to 3, **characterized in that** the phase shifter arrangement (43) is arranged spatially downstream of the clutch arrangement (44) in an axial direction, with respect to a torque running from the input region (50) to the output region (55) in this axial direction.

6. Rotational vibration damping arrangement (10) according to one of Claims 1 to 4, **characterized in that** the phase shifter arrangement (43) is connected to the input region (50) in a wobbling and rotationally fixed fashion.

7. Rotational vibration damping arrangement (10) according to one of Claims 1 to 6, **characterized in that** the rotational vibration damping arrangement (10) has a mass pendulum (46).

8. Rotational vibration damping arrangement (10) according to one of Claims 1 to 7, **characterized in that** the phase shifter arrangement (43) and the clutch arrangement (44) form a common wet space (63).

9. Rotational vibration damping arrangement (10) according to one of Claims 1 to 7, **characterized in that** the phase shifter arrangement (43) and the clutch arrangement (44) form a phase shifter wet space (89) and a clutch wet space (90).

10. Rotational vibration damping arrangement (10) according to Claim 9, **characterized in that** the phase shifter wet space (89) and the clutch wet space (90) are sealed with respect to one another by a common sealing element (88).

## Revendications

1. Système d'amortissement de vibrations de torsion (10) pour la chaîne cinématique d'un véhicule à moteur, comprenant
- une zone d'entrée (50) à entraîner en rotation autour d'un axe de rotation (A) et une zone de sortie (55), et
- un premier chemin de transmission de couple de rotation (47) et parallèlement à celui-ci un deuxième chemin de transmission de couple de rotation (48), qui partent tous les deux de la zone d'entrée (50) et
- un dispositif de couplage (44) se trouvant en liaison avec la zone de sortie (55) pour la superposition des couples de rotation transmis par les deux chemins de transmission de couple de rotation (47; 48), et
- un dispositif déphaseur (43) pour le premier chemin de transmission de couple de rotation (47) pour la production d'un décalage de phase d'irrégularités de rotation transmises par le premier chemin de transmission de couple de rotation (47) par rapport à des irrégularités de rotation transmises par le deuxième chemin de transmission de couple de rotation (48),
**caractérisé en ce qu'**au moins une partie du dispositif déphaseur (43) et le dispositif de couplage (44) sont espacés axialement l'un de l'autre au moins sur une partie de leur extension radiale et forment ainsi un espace de passage (51) pour l'agencement d'un arbre de propulsion du véhicule monté transversalement à l'axe de rotation (A), dans lequel l'espace de passage (51) est formé radialement à l'extérieur d'une région d'assemblage du dispositif déphaseur (43) et du dispositif de couplage (44).

2. Système d'amortissement des vibrations de torsion (10) selon la revendication 1, **caractérisé en ce que** le dispositif de couplage (44) comprend une première partie d'entrée (53), une deuxième partie d'entrée (54), une unité de superposition (52) et une partie de sortie (49), dans lequel la première partie d'entrée (53) est assemblée au dispositif déphaseur (43) et à l'unité de superposition (52) et la deuxième partie d'entrée (54) est assemblée à la zone d'entrée (50) et à l'unité de superposition (52) et l'unité de superposition (52) est assemblée aussi bien à la première partie d'entrée (53) qu'à la deuxième partie d'entrée (54) et à la partie de sortie (49) et dans lequel la partie de sortie (49) forme la zone de sortie (55).

3. Système d'amortissement des vibrations de torsion (10) selon la revendication 1 ou 2, **caractérisé en ce que** le dispositif déphaseur (43) comprend un système de vibration (56) avec une masse primaire (1) et un élément intermédiaire (57) pouvant tourner autour de l'axe de rotation (A) par rapport à la masse primaire (1) contre l'action d'un système de ressort (4).

4. Système d'amortissement des vibrations de torsion (10) selon l'une quelconque des revendications 1 à 3, **caractérisé en ce que**, par rapport à un couple de rotation s'étendant en direction axiale de la zone d'entrée (50) à la zone de sortie (55), le dispositif de couplage (44) est monté spatialement après le dispositif déphaseur (43) dans cette direction axiale.

5. Système d'amortissement des vibrations de torsion (10) selon l'une quelconque des revendications 1 à 3, **caractérisé en ce que**, par rapport à un couple de rotation s'étendant en direction axiale de la zone d'entrée (50) à la zone de sortie (55), le dispositif déphaseur (43) est monté spatialement après le dispositif de couplage (44) dans cette direction axiale.

6. Système d'amortissement des vibrations de torsion (10) selon l'une quelconque des revendications 1 à 4, **caractérisé en ce que** le dispositif déphaseur (43) est assemblé à la zone d'entrée (50) de façon souple en nutation et solidaire en rotation.

7. Système d'amortissement des vibrations de torsion (10) selon l'une quelconque des revendications 1 à 6, **caractérisé en ce que** le système d'amortissement des vibrations de torsion (10) présente un pendule pesant (46).

8. Système d'amortissement des vibrations de torsion (10) selon l'une quelconque des revendications 1 à 7, **caractérisé en ce que** le dispositif déphaseur (43) et le dispositif de couplage (44) forment une chambre humide commune (63).

9. Système d'amortissement des vibrations de torsion (10) selon l'une quelconque des revendications 1 à 7, **caractérisé en ce que** le dispositif déphaseur (43) et le dispositif de couplage (44) forment une chambre humide de déphaseur (89) et une chambre humide de couplage (90).

10. Système d'amortissement des vibrations de torsion (10) selon la revendication 9, **caractérisé en ce que** la chambre humide de déphaseur (89) et la chambre humide de couplage (90) sont étanches l'une par rapport à l'autre au moyen d'un élément d'étanchéité commun (88).
